# FASCICULE DE BREVET EUROPEEN

(11) **EP 0 760 772 B1**
(45) Date de publication et mention de la délivrance du brevet: **11.02.1998**
(21) Numéro de dépôt: 95920942.0
(22) Date de dépôt: 16.05.1995
(51) Int. Cl.: B62K 19/16, B62K 19/00, B29D 12/00

(54) **CADRE DE BICYCLETTE EN MATERIAU COMPOSITE, MOULES POUR LA REALISATION D'UN TEL CADRE, ET PROCEDE DE MOULAGE DU CADRE**
FAHRRADRAHMEN AUS VERBUNDWERKSTOFF, VERFAHREN ZU SEINER HERSTELLUNG UND FORM DAFÜR
BICYCLE FRAME OF COMPOSITE MATERIAL, MOLDS FOR OBTAINING SUCH A FRAME AND FRAME MOLDING METHOD

(30) Priorité: 01.06.1994 FR 9406681
(43) Date de publication de la demande: 12.03.1997
(73) Titulaire: TIME SPORT INTERNATIONAL, 58649 Varennes-Vauzelles (FR)
(72) Inventeur: GUEUGNEAUD, Jean-Marc, F-38110 Saint-Clair-de-la-Tour (FR)
(74) Mandataire: Michardière, Bernard
(86) Numéro de dépôt international: FR9500633
(87) Numéro de publication internationale: WO9532887

(56) Documents cités:
- EP-A- 0 491 363
- WO-A-93/08421
- FR-A- 2 528 002
- FR-A- 2 702 730
- US-A- 5 271 784

## Description

L'invention est relative à un cadre de bicyclette en matériau composite, du genre de ceux qui comprennent un tube diagonal relié, par un boîtier de pédalier, à un tube de selle et à deux bases s'étendant vers l'arrière, en s'écartant, à partir du boîtier de pédalier, un hauban arrière reliant les extrémités des bases à une partie haute du tube de selle, et un tube longitudinal supérieur reliant le tube de selle à une douille de direction, laquelle assure la liaison entre ce tube longitudinal et l'extrémité supérieure du tube diagonal.

Les cadres de bicyclette en matériau composite, c'est-à-dire en matériau à base de libres de carbone ou libres équivalentes, présente l'avantage d'une réduction sensible du poids.

Les cadres actuels en matériau composite se divisent, en pratique, en deux grandes familles à savoir les cadres monocoques et les cadres à raccords composites ou raccords aluminium.

Les cadres monocoques sont réalisés par moulage en une seule pièce, ou éventuellement par surmoulage de deux parties fabriquées au préalable.

Ce procédé de fabrication impose un nombre important d'outillages de façon à pouvoir couvrir la totalité de la demande clientèle ; un minimum de douze tailles semble nécessaire pour un produit de ce niveau de gamme, afin de satisfaire à l'éventail des morphologies de cyclistes.

Le coût des investissements en outillages est très lourd pour cette fabrication de cadres monocoques.

En outre, le concept du cadre monocoque est pénalisant pour le produit lui-même. En effet, l'opération de moulage s'effectue avec un noyau perdu, généralement en polyuréthane ou en mousse de matière équivalente. La surcharge pondérale imposée par le noyau de moulage qui reste à l'intérieur des tubes du cadre est un inconvénient important puisqu'il va à l'encontre de la réduction de poids du cadre. Parfois, des noyaux gonflables sont utilisés lors du moulage pour éviter les noyaux perdus, mais la mise en oeuvre de tels noyaux gonflables est délicate ; de plus la qualité de moulage est insuffisante et nécessite un surcoût de finition.

Les cadres à raccords composites, constituant la deuxième famille évoquée précédemment, sont réalisés de manière conventionnelle. Des éléments tubulaires en matériau composite sont assemblés par collage sur des raccords de jonction.

Les raccords sont réalisés en matériau composite ce qui permet un gain de poids sensible par rapport aux modèles de raccords traditionnels en aluminium.

Cette technologie des cadres à raccords composites permet de réaliser des cadres performants tant au plan du poids que des qualités mécaniques, mais la réalisation des raccords en matériau composite s'avère coûteuse et délicate.

Par ailleurs, les opérations d'assemblage et de fabrication restent aussi nombreuses que pour un cadre à raccords en aluminium ou en alliage léger. Les liaisons par collage sont aussi nombreuses. Il en résulte un côut de fabrication élevé.

L'invention a pour but, surtout, de remédier aux inconvénients des deux grandes familles de cadres composites évoquées ci-dessus. L'invention vise, en particulier, à fournir un cadre en matériau composite qui soit aussi rigide que possible et particulièrement fiable et robuste, tout en restant d'un coût de fabrication acceptable.

Selon l'invention, un cadre de bicyclette en matériau composite, du genre défini précédemment, est caractérisé par le fait qu'il comprend un premier sous-ensemble moulé d'un seul bloc constitué au moins du tube diagonal, du boîtier de pédalier, du tube de selle, des deux bases et de la partie basse de la douille de direction, et un deuxième sous-ensemble moulé d'un seul bloc constitué du tube longitudinal supérieur, d'un raccord de selle et de la partie supérieure de la douille de direction, la réunion de ces deux sous-ensembles étant réalisée par collage.

Avantageusement, le tube diagonal, le tube de selle et le tube longitudinal supérieur sont dépourvus de tout noyau de moulage à l'intérieur.

Le hauban arrière constitue généralement un troisième sous-ensemble moulé d'un seul bloc dont l'extrémité supérieure est reliée par collage à un raccord de hauban prévu sur le tube de selle et dont chaque extrémité inférieure est reliée à une patte elle-même reliée à la partie arrière d'une base.

Avantageusement, le cadre de bicyclette comprend une douille de liaison, engagée dans les deux parties en matériau composite de la douille de direction, ces deux parties étant appliquées bout à bout et collées à la douille de liaison et entre elles.

La douille de liaison, servant à l'assemblage des deux parties en matériau composite de la douille de direction, est de préférence réalisée en deux pièces emboîtées collées. Chaque pièce de la douille de liaison peut comporter à son extrémité extérieure une collerette formant portée de diamètre supérieur à celui de la douille en matériau composite.

L'invention est également relative aux moules pour réaliser un cadre en matériau composite selon l'invention.

Un premier moule, pour réaliser le premier sous-ensemble du cadre, est constitué de deux demi-moules s'appliquant l'un contre l'autre suivant un plan de joint passant par l'axe du tube diagonal et l'axe du tube de selle, et est caractérisé par le fait que chaque demi-moule comprend deux éléments assemblés, de manière démontable, suivant un plan de jonction orthogonal au plan de l'axe du tube diagonal et de l'axe du tube de selle et passant par l'axe du boîtier de pédalier, un premier élément du demi-moule comportant une empreinte de tube de selle et une empreinte de base prévue au fond d'un évidement propre à recevoir un noyau, conjugué de l'évidement, lequel noyau comporte une empreinte de base associée à celle de l'évidement, tandis que de deuxième élément du demi-moule comporte une empreinte de tube diagonal et de partie inférieure de douille de direction, le moule permettant de mouler un groupe de premiers sous-ensembles de cadre de dimensions différentes en changeant uniquement le modèle de deuxième élément du demi-moule.

Avantageusement, le premier élément du demi-moule comporte une empreinte de tube de selle correspondant à la longueur maximale possible du tube de selle pour le groupe de cadres en matériau composite destinés à être fabriqués avec ce premier élément et avec plusieurs modèles de deuxième élément de demi-moule.

Le moule pour la réalisation du deuxième sous-ensemble du cadre se compose également de deux demi-moules appliqués suivant un plan de joint passant par l'axe du tube longitudinal supérieur et par l'axe de la douille de direction et du raccord de selle, et est caractérisé par le fait chaque demi-moule comprend deux parties correspondant à chacune des extrémités du tube longitudinal supérieur avec respectivement la partie supérieure de la douille de direction et le raccord de selle, et une entretoise située entre ces deux parties, cette entretoise ayant une dimension variable, suivant la direction de l'axe du tube longitudinal supérieur pour permettre de faire varier la longueur de ce tube.

De préférence, le hauban arrière, constituant le troisième sous-ensemble du cadre, est identique sur tous les modèles de cadres et le moule pour ce troisième sous-ensemble est unique.

L'invention est également relative à un procédé de moulage d'un cadre de bicyclette tel que défini précédemment, caractérisé par le fait qu'on réalise le moulage en un seul bloc du premier sous-ensemble en utilisant des mandrins de moulage pour la partie inférieure de la douille de direction, le tube diagonal, le tube de selle, le boîtier de pédalier, ces mandrins étant propres à être dégagés ultérieurement, et un noyau en mousse rigide perdu pour les bases, que l'on moule en un seul bloc le tube supérieur longitudinal avec le raccord de selle et la partie supérieure de la douille de direction, en utilisant des mandrins propres à être dégagés ultérieurement, que l'on moule en un seul bloc le hauban arrière, et que l'on effectue l' assemblage par collage des divers sous-ensembles du cadre, après retrait des susdits mandrins.

Pour préparer l'ébauche du cadre en matériau composite, avant une injection de résine dans le moule, on peut prévoir des mandrins propres à s'emboîter les uns dans les autres de manière à permettre de constituer une ossature pour le premier et le deuxième sous-ensemble, avant mise en place dans le moule, et l'on habille ensuite cette ossature en matériau composite, l'ensemble étant ensuite placé dans le moule pour l'injection de la résine.

Le mandrin du tube de selle s'emboîte, à son extrémité inférieure, dans le mandrin de boîtier de pédalier, de même que les noyaux en mousse rigide perdus pour les bases. Le mandrin du raccord de hauban s'emboîte dans le mandrin du tube de selle. Le mandrin de la partie inférieure de la douille de direction reçoit l'extrémité supérieure de mandrin du tube diagonal.

Ce mandrin du tube diagonal peut, selon une première possibilité, traverser le mandrin du boîtier de pédalier de manière à être extrait à travers ce mandrin de boîtier de pédalier. Selon une autre possibilité, le mandrin du tube diagonal ne débouche pas dans le boîtier de pédalier et ce n'est qu'après moulage que les zones en matériau composite du boîtier de pédalier, situées dans l'alignement du mandrin du tube diagonal, sont percées pour permettre l'extraction de ce mandrin de tube diagonal.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La figure 1, de ces dessins, est une vue en élévation schématique montrant les trois sous-ensembles monoblocs d'un cadre selon l'invention, avant assemblage.

La figure 2, montre, semblablement à la figure 1, le cadre réalisé après assemblage des trois sous-ensembles.

La figure 3 est une vue schématique en plan d'un demi-moule, avec ses deux éléments, pour la réalisation du premier sous-ensemble.

La figure 4 est une vue en élévation des mandrins emboîtés, en cours d'habillage avec du matériau composite, en vue du moulage ultérieur du premier sous-ensemble.

La figure 5 est une coupe, à plus grande échelle, suivant la ligne V-V figure 3 des deux demi-moules appliqués l'un contre l'autre.

La figure 6 est une coupe suivant la ligne VI-VI, figure 3 à plus grande échelle, des deux demi-moules appliqués l'un contre l'autre.

La figure 7 est une vue en plan du demi-moule pour le deuxième sous-ensemble.

La figure 8 est une vue en élévation du hauban arrière.

La figure 9 est une coupe axiale, à plus grande échelle, illustrant l'assemblage de la douille de direction.

La figure 10, enfin, est une coupe axiale partielle, illustrant l'assemblage du raccord de hauban et du hauban arrière.

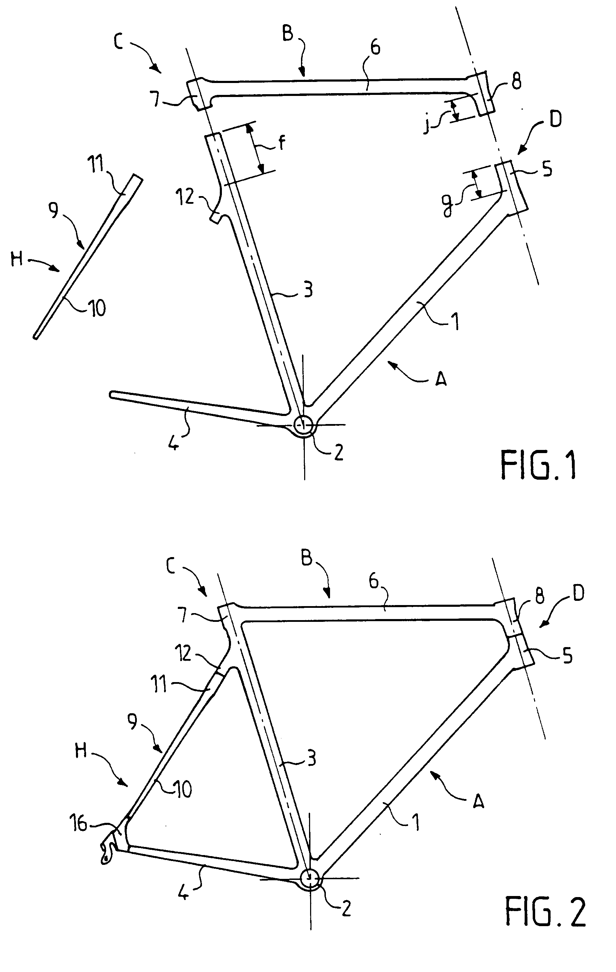

En se reportant à la figure 1, on peut voir un cadre de bicyclette C en matériau composite, avant assemblage, conforme à l'invention.

Le cadre C comprend un premier sous-ensemble A moulé d'un seul bloc constitué du tube diagonal 1, du boîtier de pédalier 2, du tube de selle 3, des deux bases 4 qui s'étendent vers l'arrière, en s'écartant, à partir du boîtier de pédalier 2 et de la partie basse 5 de la douille de direction D.

Le cadre comprend un deuxième sous-ensemble B moulé d'un seul bloc et constitué du tube longitudinal supérieur 6, d'un raccord de selle 7 et de la partie supérieure 8 de la douille de direction. Le tube supérieur 6, dans l'exemple considéré, est un tube horizontal ; ce tube pourrait cependant être incliné en particulier de haut en bas du raccord de selle 7 vers la douille de direction.

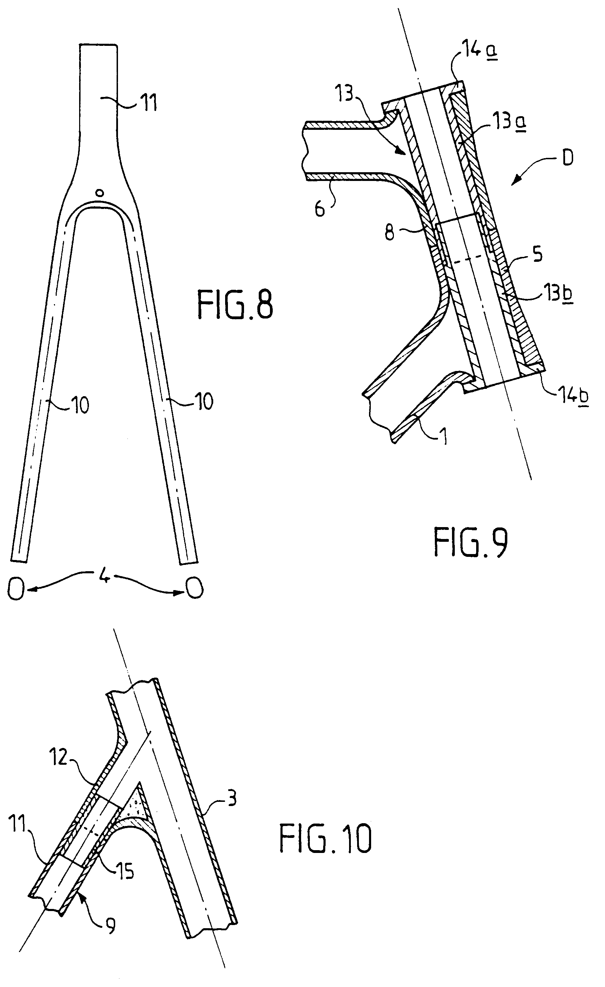

Un troisième sous-ensemble H moulé d'un seul bloc est constitué par le hauban arrière 9 comportant, comme visible sur la figure 8, deux branches 10 formant une sorte de fourche arrière, reliées à leur l'extrémité supérieure à un élément tubulaire unique 11 de plus fort diamètre.

Le tube de selle 3 est muni d'un raccord de hauban 12 dont la position relativement aux bases et au boîtier de direction 2 reste constante. Pour des cadres de tailles différentes, c'est-à-dire dont le tube de selle 3 a des longueurs différentes, tout en conservant le même angle avec les bases 4, le hauban arrière 9 reste identique. D'un tube de selle à l'autre, c'est la zone f, située au-dessus du raccord 12 qui peut varier de longueur. Les parties 5 et 8 de la douille de direction en matériau composite varieront également de longueur dans les zones cylindriques g et j, en liaison avec les variations de longueur dans la zone f.

Du fait que le hauban arrière 9 demeure identique d'un cadre à l'autre, ce hauban pourrait, en variante, être moulé d'un seul bloc ave le premier sous-ensemble A.

L'axe du tube de selle 3 est sensiblement parallèle, ou est parallèle, à l'axe de la douille de direction D, de telle sorte qu'une variation de hauteur conjuguée de la zone f d'une part et des zones j, g d'autre part, n'entraîne pas de changement sensible de longueur du tube longitudinal supérieur 6. Dans le cas où les axes ne sont que sensiblement parallèles, la variation de longueur engendrée par une variation de hauteur de la zone f, est de l'ordre de quelques dizièmes de millimètre qui peuvent être rattrapés par usinage, sans avoir à changer le tube 6.

Il apparaît donc, dès maintenant, que la solution de l'invention permet de réaliser un groupe de cadres de tailles différentes en modifiant un nombre réduit de pièces.

La réunion des trois sous-ensembles est effectuée par collage.

L'assemblage de la partie basse 5 et de la partie supérieure 8 de la douille de direction en matériau composite est réalisé, comme illustré sur la figure 9, à l'aide d'une douille de liaison 13, par exemple métallique ou en matériau composite. Cette douille 13 est réalisée en deux pièces 13a, 13b, cylindriques, emboîtées à leur extrémité située à l'intérieur du cadre. Chaque pièce 13a, 13b de la douille comporte à son extrémité extérieure une collerette respectivement 14a, 14b, formant portée, de diamètre supérieur à celui des parties 8, 5 en matériau composite de la douille. Les parties 13a, 13b sont ajustées pour entrer dans les parties 5, 8 en matériau composite avec le jeu nécessaire pour un film de colle. Les parties 13a, 13b sont assemblées entre elles par collage au niveau de leur emboîtement. Les parties 5 et 8 en matériau composite sont appliquées bout à bout et sont collées à la surface extérieure des pièces 13a, 13b et entre elles. L'assemblage ainsi réalisé est particulièrement fiable.

La figure 10 illustre l'assemblage de l'élément tubulaire 11 du hauban arrière 9 et du raccord 12 de hauban prévu en partie haute du tube de selle 3. Le raccord tubulaire 12 et l'élément 11 ont même diamètre interne et même diamètre externe. Un manchon 15, engagé sans jeu sensiblement sur la moitié de sa longueur dans le raccord 12 et dans l'élément 11, est collé à ces deux éléments placés bout à bout et également collés ensemble.

L'extrémité inférieure des branches 10 du hauban est reliée à l'extrémité arrière des bases 4, de manière classique, par une patte métallique 16 collée, visible sur la figure 2. Les tubes 1, 3 et 6 sont creux et dépourvus de tout noyau de

moulage dans le cadre assemblé. Les bases 4 comportent un noyau de moulage perdu, par exemple en polyuréthane, dont le poids est très réduit en raison du volume interne réduit de ces bases 4. Il en est de même au niveau des branches 10 du hauban 9 qui peuvent avoir un noyau perdu en mousse de polyuréthane, sans que le poids du cadre soit modifié de manière sensible.

On considère maintenant les outillages, moules et mandrins, mis en oeuvre pour réaliser le cadre de l'invention.

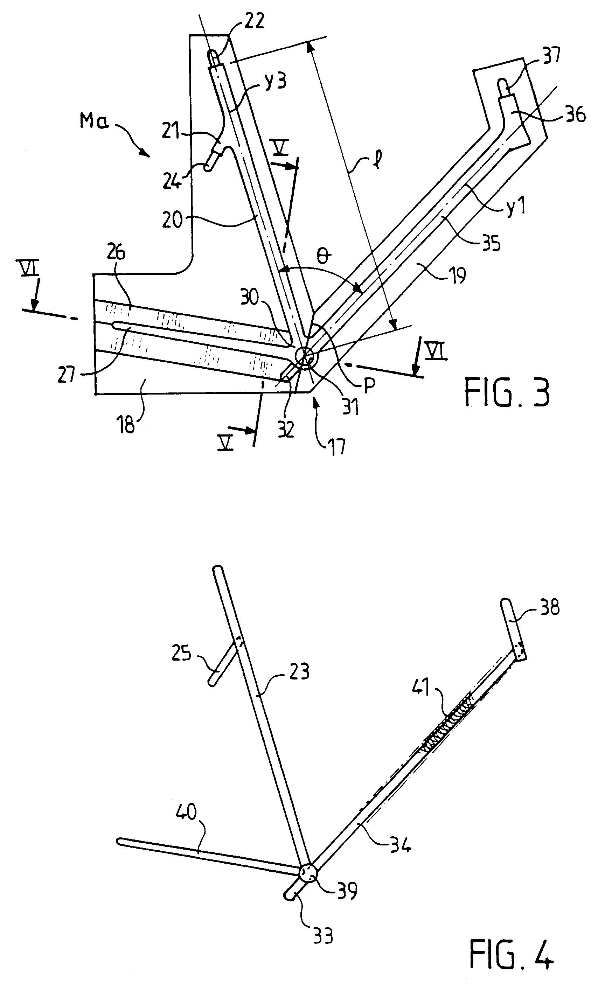

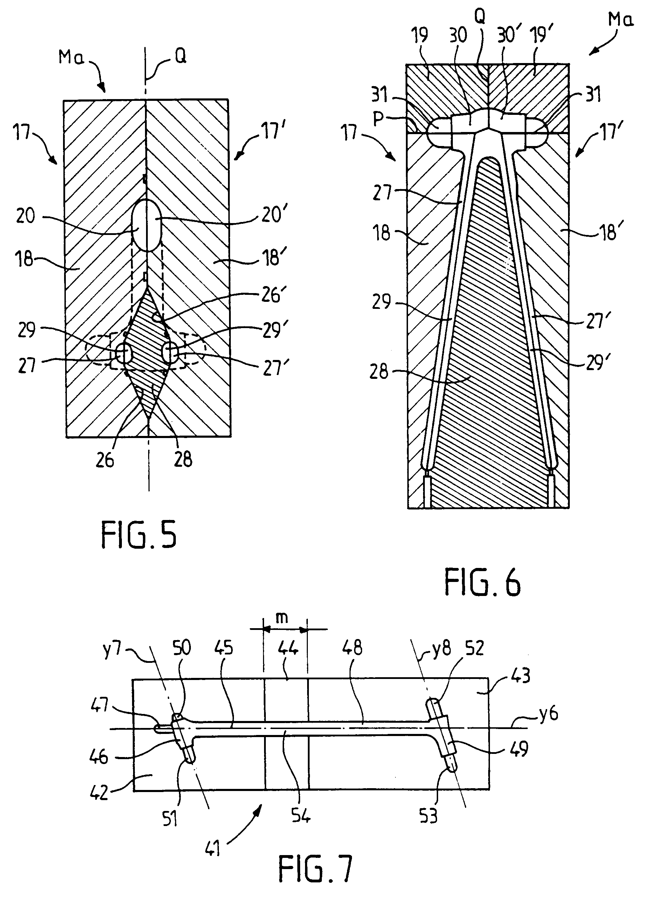

La figure 3 illustre un demi-moule 17 pour le moulage du premier sous-ensemble A. Le moule Ma complet, pour réaliser ce premier sous-ensemble A, est constitué de deux demi-moules 17, 17' (voir figures 4 et 5) s'appliquant l'un contre l'autre suivant un plan de joint Q passant par l'axe du tube diagonal 1 et du tube de selle 3. Le demi-moule 17' conjugué du demi-moule 17 représenté sur la figure 3 est symétrique de ce dernier par rapport au plan de joint Q. Les parties du moule 17' seront désignées par les mêmes références numériques affectées du signe '. L'ouverture du moule Ma s'effectue en écartant les deux demi-moules 17, 17' de part et d'autre du plan Q.

Le demi-moule 17 comprend deux éléments 18, 19 en appui suivant un plan de jonction P orthogonal au plan des axes géométriques y1, y3 du tube diagonal et du tube de selle. Autrement dit, le plan P est orthogonal au plan de la figure 3. Les élements 18, 19 sont assemblés mécaniquement l'un à l'autre, de manière démontable.

L'élément 18, sensiblement en forme d'angle droit tournant sa concavité vers l'arrière, comporte une empreinte 20 de tube de selle. Cette empreinte 20 correspond à une cavité semi-cylindrique et à la demi-section du tube de selle 3. L'empreinte 20 comporte une sorte de moignon 21 correspondant à la demi-empreinte du raccord 12 de hauban. L'extrémité supérieure de l'empreinte 20 est prolongée par un logement 22 coaxial, de dimension moindre, destiné à recevoir l'extrémité supérieure d'un mandrin 23 visible sur la figure 4. D'une manière semblable, l'empreinte 21 est prolongée, vers le bas, par un logement 24, coaxial, de dimension moindre destiné à recevoir l'extrémité inférieure d'un mandrin 25 (figure 4) pour le raccord de hauban 12.

Dans l'exemple de réalisation considéré, les mandrins 23 et 25, ainsi que les autres mandrins dont il sera question plus loin, sont des mandrins métalliques démontables qui peuvent être dégagés, par retrait des tubes après moulage.

Les mandrins pourraient être réalisés en toute autre matière, notamment en une matière susceptible d'être éliminée par exemple par dissolution ou par fusion, après moulage des tubes. On peut citer à titre indicatif la matière connue sous le nom de commerce "Paraplast" fabriquée par la société Hexcel.

La longueur 1 de l'empreinte 20 prise entre l'extrémité supérieure de cette empreinte et l'axe géométrique du boîtier de pédalier correspond à la longueur maximale du tube de selle d'un groupe de cadres de tailles différentes destinés à être fabriqués à l'aide du moule Ma. Lorsque le cadre fabriqué correspond à une taille de tube de selle 3 inférieure à la longueur 1, il suffit de tronçonner ce tube à son extrémité supérieure, au-dessus du raccord de hauban 12, à la longueur souhaitée.

L'élément de moule 18 comporte un évidement 26 à section transversale sensiblement en V ouvert, comme visible sur la figure 5. Les deux faces de l'évidement 26 sont planes. Dans le fond de cet évidement 26 est prévue une empreinte 27 correspondant à la demi-section d'une base 4.

L'évidement 26 est destiné à recevoir la demi-section d'un noyau 28 (figure 5) dont la section transversale par un plan de coupe orthogonal au plan des axes géométriques des bases 4 a sensiblement la forme d'un losange. L'autre demi-section du noyau 28 est reçue dans l'évidement 26' de l'élément 18' de l'autre demi-moule 17'. Le noyau 28 comporte des empreintes 29, 29' conjuguées des empreintes 27, 27' pour le moulage des bases 4.

La figure 6, qui correspond à une coupe du moule et du noyau suivant le plan des axes géométriques des bases, fait apparaître la forme en coin triangulaire du noyau 28 dont la dimension transversale augmente progressivement de la zone proche du boîtier de pédalier vers l'arrière des bases.

La partie inférieure de l'empreinte 20 et la partie avant de l'empreinte 27 débouchent dans une empreinte 30 (voir figure 3) pour le moulage du boîtier de pédalier 2. Cette empreinte 30 se raccorde à un logement cylindrique 31 (voir figure 6) dont l'axe, perpendiculaire au plan de la figure 3, passe par l'intersection des axes géométriques y1 et y3. Ce logement 31 est traversé par le plan de jonction P de sorte qu'une cavité semi-cylindrique est située dans l'élément 18 et la cavité complémentaire est située dans l'élément 19.

Dans l'exemple illustré sur la figure 3, un logement 32, coaxial à l'axe y1 du tube de selle, débouche dans l'empreinte 30 et s'étend du côté opposé à l'élément 19. Ce logement 32 est destiné à recevoir l'extrémité 33 (figure 4) du mandrin métallique 34 pour le tube diagonal 1.

L'élément 19 comporte une empreinte 35 correspondant à la demi-section du tube diagonal. Cette empreinte 35, en partie basse, se raccorde à l'empreinte 30 de boîtier de pédalier. En partie haute, l'empreinte 35 débouche dans une empreinte 36 correspondant à la demi-section de la partie basse 5 de la douille de direction. L'extrémité supérieure de l'empreinte 36 est prolongée par un logement coaxial 37 de diamètre plus faible, destiné à recevoir l'extrémité supérieure du mandrin 38 pour la partie basse 5 de la douille de direction.

Un mandrin métallique 39 (figure 4) est prévu pour s'engager dans le logement 31. Dans l'exemple considéré, le mandrin 39 est traversé par un trou diamétral propre à permettre le passage de l'extrémité inférieure du mandrin 34 qui fait saillie, par son extrémité 33, de l'autre côté. Le mandrin 39 comporte en outre un logement propre à recevoir l'extrémité inférieure du mandrin 23 engagé par translation suivant la direction de son axe dans ce logement du mandrin 39.

Le mandrin 39 comporte en outre des logements propres à recevoir, respectivement, l'extrémité de noyaux 40, par exemple en mousse de polyuréthane, destinés au moulage des bases 4. Les noyaux 40 sont perdus et restent à l'intérieur des bases 4 au démoulage ; lors de l'extraction du manchon 39, les extrémités des noyaux 40 engagées dans les logements correspondants du manchon 39 sont cisaillées.

Le mandrin 23 comprend un logement dans lequel s'emboîte l'extrémité supérieure du mandrin 25, tandis que le mandrin 38 en partie basse comporte un logement dans lequel s'emboîte l'extrémité supérieure du mandrin 34.

En vue du moulage, les différents mandrins 23, 25, 34, 39 et 38 sont emboîtés les uns dans les autres et les noyaux 40 sont mis en place pour constituer une ossature de premier sous-ensemble de cadre comme illustré sur la figure 4. Les mandrins sont ensuite habillés du matériau composite, c'est-à-dire de tresses 41 en libres de carbone ou en matériau analogue. Cet habillage enveloppe de manière continue l'ossature, notamment dans les zones du boîtier de pédalier (mandrin 39) et dans les zones de jonction entre le tube diagonal 1 et la partie 5 du boîtier de direction.

L'ébauche ainsi préparée est ensuite mise en place en vue d'une injection de résine, par exemple une résine époxy, d'une manière classique, comme décrit, par example, dans FR-A-2 684 062.

Pour obtenir, dans une certaine gamme, des cadres de tailles différentes, on conserve l'élément 18 inchangé, et on l'assemble avec différents modèles d'éléments 19, dont l'axe y1 de l'empreinte 35 va former, avec l'axe y3 de l'empreinte 20 un angle variant d'un modèle d'élément 19 à l'autre, ce qui correspond à des longueurs différentes du tube supérieur 6. La hauteur de l'empreinte 36 au-dessus de l'empreinte 30 restera constante, pour garder une hauteur constante de fourche avant.

On peut ainsi fabriquer avec un outillage réduit (seul l'élément 19 varie) une gamme relativement étendue de tailles différentes de cadres.

Il est à noter que dans l'élément 19, l'empreinte 36 peut être prévue avec la hauteur maximale de sorte que pour un même angle il sera possible par tronçonnage de l'extrémité supérieure de la partie 5 et du tube de selle 3, de réaliser des cadres de hauteurs différentes, mais avec même longueur de tube supérieur 6.

Après injection de la résine et traitement thermique dans des conditions déterminées, l'opération de moulage du sous-ensemble A est terminée. On procède alors à l'ouverture du moule Ma, à la séparation des deux demi-moules 17, 17', puis à la séparation des deux éléments 18, 19 du demi-moule 17 dans lequel est resté le sous-ensemble moulé A.

On effectue alors le retrait du mandrin 34 en tirant sur l'extrémité inférieure 33 suivant la direction axiale. Le mandrin 38 peut ensuite être dégagé.

On extrait le mandrin 25 ce qui permet de dégager ensuite par le haut le mandrin 23 suivant la direction axiale. Il est enfin possible d'extraire le mandrin 39 suivant la direction de son axe, en cisaillant comme déjà indiqué les extrémités des noyaux 40 qui demeurent dans les bases 4.

En variante, le mandrin 39 pourrait être réalisé en deux parties de manière à faciliter son extraction.

Toujours en variante, l'élément 18 peut être dépourvu de logement 32, tandis que le mandrin 34 a une longueur plus faible que celle montrée sur la figure 4, de manière à s'arrêter avant d'atteindre le mandrin 39 dans lequel il n'est pas emboîté. Dans ces conditions, après démoulage, on extrait d'abord le mandrin 25, puis le mandrin 23 ; le mandrin 39 peut alors être extrait, avec cisaillement des extrémités des noyaux 40, puisque le mandrin 34 ne pénètre plus dans le mandrin 39. Le boîtier de pédalier 2 est obtenu avec une paroi périphérique continue. Pour extraire le mandrin 34, on perce un trou diamétral dans la paroi du boîtier 2, dans l'alignement du mandrin 34 qui peut alors être extrait par coulissement axial vers le bas. La zone du boîtier 2 où est pratiqué le trou pour le passage du mandrin 34 n'est que faiblement sollicitée mécaniquement, de sorte que la résistance du cadre n'est pas affectée.

La figure 7 illustre en plan un demi-moule 41 pour la fabrication du deuxième sous-ensemble B.

Le moule pour la réalisation du deuxième sous-ensemble B se compose du demi-moule 41 visible sur la figure 7 et d'un deuxième demi-moule appliqué sur le premier suivant un plan de joint passant par l'axe géométrique y6 du tube supérieur 6 et par les axes géométriques y8 et y7 de la partie 8 de la douille de direction et du raccord de selle 7.

Le demi-moule 41 se compose de deux parties extrêmes 42, 43 et d'une entretoise 44, tous ces éléments ayant la forme de parallélépipèdes rectangles. Les plans de joint entre l'entretoise 44 et les parties d'extrémité 42, 43 sont orthogonaux à l'axe y6.

La partie d'extrémité 42 comporte une empreinte 45 semi-cylindrique correspondant à la demi-section de la partie arrière du tube supérieur 6. Cette empreinte 45 débouche dans une cavité 46 correspondant à la demi-section du raccord de selle 7. A partir de l'empreinte 46, un logement 47 s'étend coaxialement à l'empreinte 45, du côté opposé à cette empreinte pour recevoir l'extrémité d'un mandrin métallique, non représenté, correspondant au volume intérieur du tube 6.

L'autre partie 43 de moule comporte une empreinte 48 correspondant à la demi-section de la zone avant du tube supérieur 6. L'empreinte 48 débouche, à son extrémité avant, dans une empreinte 49 correspondant à la demi-section de la partie supérieure 8 de la douille de direction.

Dans l'empreinte 46, comme dans l'empreinte 47, débouchent, suivant la direction de l'axe de chaque empreinte, et à chaque extrémité, des logements respectivement 50, 51 pour l'empreinte 46 et 52, 53 pour l'empreinte 49. Ces logements sont destinés à recevoir les extrémités de mandrins métalliques démontables, non représentés, qui traversent le raccord 7 et la partie 8 de douille lors du moulage.

Il est à noter que l'empreinte 49 est fermée vers l'avant suivant l'axe y6 de sorte que la partie 8 moulée ne comporte aucune ouverture vers l'avant. Le raccord de selle 7 comportera une ouverture correspondant au passage du mandrin du tube 6.

L'entretoise 44 comprend une empreinte 54 correspondant à une zone intermédiaire de la demi-section du tube 6 et assurant le raccordement entre les empreintes 45 et 48.

Pour réaliser différents modèles de sous-ensembles B, dans lesquels la longueur du tube 6 sera différente, il suffit de prévoir des entretoises 44 qui différeront, d'un modèle à l'autre, par la dimension m suivant l'axe y6.

Si, par exemple, on prévoit 7 modèles d'élément 19 de demi-moule (figure 3) associés à un même modèle d'élément 18, on fera correspondre sept modèles d'entretoise 44 pour obtenir les longueurs souhaitées de tube supérieur 6, alors que les inclinaisons des axes géométriques du tube 3 et du raccord de selle 7 d'une part et des douilles de direction 5 d'autre part ne sont pas modifiées.

Pour tous ces modèles différents, les parties 42 et 43 du demi-moule 41 de la figure 7 restent les mêmes.

Il apparaît donc que l'investissement en outillages est considérablement réduit.

Comme expliqué à propos de la figure 4, les mandrins, non représentés, destinés à la fabrication du sous-ensemble B s'emboîtent les uns dans les autres. L'extraction du mandrin du tube 6 ne sera possible qu'après avoir extrait le mandrin de la partie 8 de la douille de direction et le mandrin du raccord 7.

Pour élargir la gamme des cadres de bicyclette fabriqués selon l'invention, on peut prévoir un ou plusieurs autres modèles d'éléments 18 et de parties 42, 43, dans lesquelles, notamment, les angles d'inclinaison des axes géométriques y3 y7 et y8 pourront être différents. A chaque modèle unique d'élément 18 et de parties 42, 43 seront associés plusieurs modèles d'élément 19 et d'entretoise 44.

L'invention permet de réaliser un cadre en matériau composite très léger grâce à l'absence de noyau perdu dans les tubes principaux à savoir le tube diagonal 1, tube de selle 3 et tube supérieur 6.

De plus, le cadre de bicyclette selon l'invention est très fiable et robuste grâce à la diminution du nombre de collages qui, en outre, se situent dans des zones peu sollicitées mécaniquement.

La suppression de pièces d'assemblage de fonderie ainsi que la diminution de zones de reprise d'usinage permet de réduire sensiblement le coût de fabrication.

## Revendications

1. Cadre de bicyclette en matériau composite comprenant un tube diagonal (1) relié, par un boîtier de pédalier (2), à un tube de selle (3) et à deux bases (4) s'étendant vers l'arrière, en s'écartant, à partir du boîtier de pédalier, un hauban arrière (9) reliant les extrémités des bases à une partie haute du tube de selle, et un tube longitudinal supérieur (6) reliant le tube de selle (3) à une douille de direction (D), laquelle assure la liaison entre ce tube longitudinal (6) et l'extrémité supérieure du tube diagonal (1), caractérisé par le fait qu'il comprend un premier sous-ensemble (A) moulé d'un seul bloc constitué au moins du tube diagonal (1), du boîtier de pédalier (2), du tube de selle (3), des deux bases (4) et de la partie basse (5) de la douille de direction, et un deuxième sous-ensemble (B) moulé d'un seul bloc constitué du tube longitudinal supérieur (6), d'un raccord de selle (7) et de la partie supérieure (8) de la douille de direction (D), la réunion de ces deux sous-ensembles (A, B) étant réalisée par collage.

2. Cadre de bicyclette selon la revendication 1, caractérisé par le fait que le hauban arrière (9) constitue un troisième sous-ensemble (H) moulé d'un seul bloc dont l'extrémité supérieure (11) est reliée par collage à un raccord de hauban (12) prévu sur le tube de selle (3) et dont chaque extrémité inférieure est reliée à une patte (16) elle-même reliée à la partie arrière d'une base (4).

3. Cadre de bicyclette selon la revendication 1 ou 2, caractérisé par le fait que le tube diagonal (1), le tube de selle (3) et le tube longitudinal supérieur (6) ainsi que la douille de direction (D) et le raccord de selle (7) sont dépourvus de tout noyau à l'intérieur.

4. Cadre de bicyclette selon l'une des revendications précédentes, caractérisé par le fait qu'il comprend une douille de liaison (13) engagée dans les deux parties (5, 8) de la douille de direction en matériau composite (D), ces deux parties (5, 8) étant appliquées bout à bout et collées entre elles et à la douille de liaison (13).

5. Cadre de bicyclette selon la revendication 4, caractérisé par le fait que la douille de liaison (13) est réalisée en deux pièces (13a, 13b) emboîtées collées.

6. Moule (Ma) pour réaliser le premier sous-ensemble (A) d'un cadre de bicyclette selon l'une des revendications précédentes, ce moule (Ma) étant constitué de deux demi-moules (17, 17') s'appliquant l'un contre l'autre suivant un plan de joint (Q) passant par l'axe (y1) du tube diagonal et l'axe (y3) du tube de selle, caractérisé par le fait que chaque demi-moule (17, 17') comprend deux éléments (18, 19 ; 18', 19') assemblés, de manière démontable, suivant un plan de jonction (P) orthogonal au plan de l'axe (y1) du tube diagonal et de l'axe (y3) du tube de selle, et passant par l'axe du boîtier de pédalier (2), un premier élément (18, 18') comportant une empreinte (20, 20') de tube de selle et une empreinte de base (27, 27') prévue au fond d'un évidement (26, 26') propre à recevoir un noyau (28) conjugué de l'évidement (26, 26'), tandis que le deuxième élément (19, 19') du demi-moule comporte une empreinte (35) de tube diagonal et de partie inférieure (36) de la douille de direction, le moule (Ma) permettant de mouler un groupe de premiers sous-ensembles (A) de cadre de dimensions différentes en changeant uniquement le modèle de deuxième élément (19) du demi-moule (17, 17').

7. Moule selon la revendication 6, caractérisé par le fait que le premier élément du demi-moule comporte une empreinte de tube de selle (20) correspondant à la longueur (1) maximale possible du tube de selle pour le groupe de cadres en matériau composite destinés à être fabriqués avec ce premier élément (18) et avec plusieurs modèles de deuxième élément (19) de demi-moule.

8. Moule pour la réalisation du deuxième sous-ensemble d'un cadre de bicyclette selon l'une des revendications 1 à 5, se composant de deux demi-moules appliqués suivant un plan de joint passant par l'axe (y6) du tube longitudinal supérieur et par l'axe (y8) de la douille de direction et l'axe (y7) du raccord de selle (7), caractérisé par le fait que chaque demi-moule comprend deux parties (42, 43) correspondant à chacune des extrémités du tube longitudinal supérieur avec respectivement la partie supérieure de la douille de direction (D) et le raccord de selle (7), et une entretoise (44) située entre ces deux parties (42, 43), cette entretoise ayant une dimension m variable, suivant la direction de l'axe (y6) du tube longitudinal supérieur pour permettre de faire varier la longueur de ce tube.

9. Procédé de moulage d'un cadre de bicyclette selon l'une des revendications 1 à 5, caractérisé par le fait qu'on réalise le moulage en un seul bloc du premier sous-ensemble (A) en utilisant des mandrins de moulage (38, 34, 23) pour la partie inférieure de la douille de direction, le tube diagonal, le tube de selle, ces mandrins étant propres à être dégagés ultérieurement, et un noyau perdu (40) en mousse rigide pour les bases, que l'on moule en un seul bloc le tube supérieur longitudinal (6) avec le raccord de selle (7) et la partie supérieure (8) de la douille de direction, en utilisant des mandrins propres à être dégagés ultérieurement, que l'on moule en un seul bloc le hauban arrière (9), et que l'on effectue l'assemblage par collage des divers sous-ensembles du cadre, après retrait des susdits mandrins.

10. Procédé de moulage d'un cadre de bicyclette selon la revendication 9, caractérisé par le fait que pour préparer l'ébauche du cadre en matériau composite, avant une injection de résine dans le moule, on prévoit des mandrins (23, 25, 34, 38, 39) propres à s'emboîter les uns dans les autres de manière à permettre de constituer une ossature pour le premier (A) et le deuxième sous-ensemble (B), avant mise en place dans le moule, et l'on habille ensuite cette ossature en matériau composite, l'ensemble étant ensuite placé dans le moule pour l'injection de la résine.

## Claims

1. Bicycle frame of composite material comprising a diagonal down tube (1) connected by a bottom bracket crankset housing (2) to a seat tube (3) and to two chain stays (4) extending backward, diverging from the bottom bracket crankset housing, a seat stay (9) connecting the ends of the chain stays to a top part of the seat tube, and a longitudinal top tube (6) connecting the seat tube (3) to a steering bush (D) which provides the link between this longitudinal tube (6) and the top end of the diagonal down tube (1), characterized in that it comprises a first subassembly (A) molded as a single piece consisting at least of the diagonal down tube (1), of the bottom bracket crankset housing (2), of the seat tube (3), of the two chain stays (4) and of the bottom part (5) of the steering bush, and a second subassembly (B) molded as a single piece consisting of the longitudinal top tube (6), of a seat joint (7) and of the top part (8) of the steering bush (D), these two subassemblies (A, B) being joined together by bonding.

2. Bicycle frame according to claim 1, characterized in that the seat stay (9) constitutes a third subassembly (H) molded as a single piece, the top end (11) of which is connected by bonding to a seat stay joint (12) provided on the seat tube (3) and each bottom end of which is connected to a lug (16) itself connected to the rear part of a chain stay (4).

3. Bicycle frame according to claim 1 or 2, characterized in that the diagonal down tube (1), the seat tube (3) and the longitudinal top tube (6), as well as the steering bush (D) and the seat joint (7) have no core inside them.

4. Bicycle frame according to one of the preceding claims, characterized in that it comprises a coupling sleeve (13) engaged in the two parts (5, 8) of the steering bush (D) of composite material, these two parts (5, 8) being pushed together end to end and bonded together and bonded to the coupling sleeve (13).

5. Bicycle frame according to claim 4, characterized in that the coupling sleeve (13) is made in two parts (13a, 13b) fitted together and bonded.

6. Mold (Ma) for producing the first subassembly (A) of a bicycle frame according to one of the preceding claims, this mold (Ma) consisting of two mold halves (17, 17') which are pushed together along a parting line (Q) passing through the axis (y1) of the diagonal down tube and the axis (y3) of the seat tube, characterized in that each mold half (17, 17') comprises two elements (18, 19; 18', 19') joined together in such a way that they can be taken apart along a parting line (P) orthogonal to the plane of the axis (y1) of the diagonal down tube and of the axis (y3) of the seat tube and passing through the axis of the bottom bracket crankset housing (2), a first element (18, 18') including a molding cavity (20, 20') for the seat tube and a molding cavity (27, 27') for the chain stay provided at the bottom of a recess (26, 26') capable of taking a core (28), the conjugate of the recess (26, 26'), while the second element (19, 19') of the mold half includes a molding cavity (35) for the diagonal down tube and for the bottom part (36) of the steering bush, the mold (Ma) allowing a group of first frame subassemblies (A) of different dimensions to be molded while changing only the type of second element (19) of the mold half (17, 17').

7. Mold according to claim 6, characterized in that the first element of the mold half includes a molding cavity for the seat tube (20) corresponding to the maximum possible length (1) of the seat tube for the group of composite-material frames to be manufactured with this first element (18) and with several types of second mold-half element (19).

8. Mold for the production of the second subassembly of a bicycle frame according to one of claims 1 to 5, composed of two mold halves pushed together along a parting line passing through the axis (y6) of the longitudinal top tube and through the axis (y8) of the steering bush and the axis (y7) of the seat joint (7), characterized in that each mold half comprises two parts (42, 43) corresponding to each of the ends of the longitudinal top tube with, respectively, the top part of the steering bush (D) and the seat joint (7), and a spacer piece (44) situated between these two parts (42, 43), this spacer piece having a dimension m which can vary, in the direction of the axis (y6) of the longitudinal top tube, so as to allow the length of this tube to be varied.

9. Method for molding a bicycle frame according to one of claims 1 to 5, characterized in that the first subassembly (A) is molded as a single piece using molding formers (38, 34, 23) for the bottom part of the steering bush, the diagonal down tube, the seat tube, it being possible for these formers to be removed subsequently, and a lost core (40) made of rigid foam for the chain stays, in that the longitudinal top tube (6) with the seat joint (7) and the top part (8) of the steering bush are molded as a single piece using formers which can be removed subsequently, in that the seat stay (9) is molded as a single piece and in that the various subassemblies of the frame are joined together by bonding after the aforementioned formers have been removed.

10. Method for molding a bicycle frame according to claim 9, characterized in that, to prepare the composite-material frame blank, before resin is injected into the mold, formers (23, 25, 34, 38, 39) are provided, these fitting together so as to allow a framework for the first (A) and the second (B) subassembly to be formed before placing in the mold, and this framework is then covered with composite material, the whole item then being placed in the mold for the injection of the resin.

## Patentansprüche

1. Fahrradrahmen aus Verbundmaterial mit einem Diagonalrohr (1), das über ein Pedalgehäuse (2) mit einem Sattelrohr (3) und zwei sich von dem Pedalgehäuse auseinanderlaufend nach hinten erstreckenden Basiselementen (4) verbunden ist, einem hinteren Holm (9), der die Enden der Basiselemente mit einem oberen Bereich des Sattelrohres verbindet, und einem oberen Langsrohr (6), das das Sattelrohr (3) mit einer Lenkbuchse (D) verbindet, welche die Verbindung zwischen dem Längsrohr (8) und dem oberen Ende des Diagonalrohres (1) herstellt, dadurch gekennzeichnet, daß der Rahmen eine erste Untereinheit (A), die als ein Block gegossen ist, aufweist und aus wenigstens dem Diagonalrohr (1), dem Pedalgehäuse (2), dem Sattelrohr (3), den beiden Basiselementen (4) und dem unteren Teil (5) der Lenkbuchse besteht, und eine zweite, als ein Block gegossene Untereinheit (B) aufweist, die aus wenigstens dem oberen Langsrohr (6), einer Sattelverbindung (7) und dem oberen Teil (8) der Lenkbuchse (D) besteht, wobei die Verbindung der beiden Untereinheiten (A, B) durch Kleben erfolgt.

2. Fahrradrahmen nach Anspruch 1, dadurch gekennzeichnet, daß der hintere Holm (9) eine dritte, als ein Block gegossene Untereinheit (H) bildet, deren oberes Ende (11) durch Kleben mit einer am Sattelrohr (3) vorgesehenen Holmverbindung (12) verbunden ist und deren jeweilige untere Enden mit einer Lasche (16) verbunden sind, die ihrerseits mit dem hinteren Bereich einer Basis (4) verbunden ist.

3. Fahrradrahmen nach Anspruch 1 oder 2, dadurch gekennzeichnet, daß das Diagonalrohr (1), das Sattelrohr (3) und das obere Längsrohr (6) sowie die Lenkbuchse (D) und die Sattelverbindung (7) im Inneren von jeglichem Einsatz frei sind.

4. Fahrradrahmen nach einem der vorhergehenden Ansprüche, dadurch gekennzeichnet, daß er eine Verbindungsbuchse (13) aufweist, die in die beiden Teile (5, 8) der aus Verbundmaterial bestehenden Lenkbuchse (D) eingesetzt ist, wobei die beiden Teile (5, 8) endständig aneinander liegen und miteinander sowie mit der Verbindungsbuchse (13) verklebt sind.

5. Fahrradrahmen nach Anspruch 4, dadurch gekennzeichnet, daß die Verbindungsbuchse (13) aus zwei miteinander verklebten zusammengesteckten Teilen (13a, 13b) besteht.

6. Form (Ma) zur Herstellung der ersten Untereinheit (A) eines Fahrradrahmens nach einem der vorhergehenden Ansprüche, wobei die Form (Ma) aus zwei Formhälften (17, 17') besteht, die entlang einer Verbindungsebene (Q), die durch die Achse (y1) des Diagonalrohres und die Achse (y3) des Sattelrohres verläuft, aneinanderliegen, dadurch gekennzeichnet, daß jede Formhälfte (17, 17') zwei Elemente (18, 19; 18', 19') aufweist, die demontierbar entlang einer Verbindungsebene (P) zusammengesetzt sind, die senkrecht zur Ebene der Achse (y1) des Diagonalrohres und der Achse (y3) des Sattelrohres und durch die Achse des Pedalgehäuses (2) verläuft, wobei das erste Element (18, 18') einen Formhohlraum (20, 20') für das Sattelrohr und einen Formhohlraum (27, 27') für die Basiselemente, der am Boden einer Ausnehmung (26, 26') vorgesehen ist, welcher zur Aufnahme eines der Ausnehmung (26, 26') zugeordneten Kerns (28) geeignet ist, während das zweite Element (19, 19') der Formhälfte einen Formhohlraum (35) für das Diagonalrohr und den unteren Teil (36) der Lenkbuchse aufweist, wobei es die Form (Ma) ermöglicht, eine Gruppe von ersten Untereinheiten (A) des Rahmens mit verschiedenen Abmessungen herzustellen, indem lediglich das Modell des zweiten Elements (19) der Formhälften (17, 17') verändert wird,

7. Form nach Anspruch 6, dadurch gekennzeichnet, daß das erste Element der Formhälften einen Formhohlraum für das Sattelrohr (20) aufweist, der der größtmöglichen Länge (1) des Sattelrohres für die Rahmengruppe aus Verbundmaterial entspricht, die mit diesem ersten Element (18) und mit mehreren Modellen des zweiten Elements (19) der Formhälften hergestellt werden soll.

8. Form zur Herstellung der zweiten Untereinheit eines Fahrradrahmens nach einem der Ansprüche 1 bis 5, bestehend aus zwei Formhälften, die entlang einer Verbindungsebene aneinanderliegen, welche durch die Achse (y6) des oberen Längsrohres und durch die Achse (y8) der Lenkbuchse sowie die Achse (y7) der Sattelverbindung (7) verläuft, dadurch gekennzeichnet, daß jede Formhälfte zwei Teile (42, 43), die jeweils den Enden des oberen Längsrohres mit jeweils dem oberen Teil der Lenkbuchse (D) und der Saffelverbindung (7) entsprechen, und ein zwischen den beiden Teilen (42, 43) angeordnetes Zwischenstück (44) aufweist, wobei das Zwischenstück eine variable Abmessung m in Richtung der Achse (y6) des oberen Längsrohres hat, um die Veränderung der Länge dieses Rohres zu ermöglichen.

9. Verfahren zum Gießen eines Fahrradrahmens nach einem der Ansprüche 1 bis 5, dadurch gekennzeichnet, daß der Blockguß der ersten Untereinheit (A) unter Verwendung von Gießdomen (38, 34, 23) für den unteren Teil der Lenkbuchse, das Diagonalrohr und das Sattelrohr, wobei die Dome zum Schluß herausziehbar sind, und eines verlorenen Kems (40) aus starrem Schaumstoff für die Basiselemente erfolgt, daß das obere Längsrohr (6) mit der Sattelverbindung (7) und dem oberen Teil (8) der Lenkbuchse als ein Block gegossen wird, indem zum Schluß herausziehbare Dorne verwendet werden, daß der hintere Holm (9) als ein Block gegossen wird, und daß die Montage durch Verkleben der Untereinheiten des Rahmens nach dem Herausziehen der Dorne erfolgt.

10. Verfahren zum Gießen eines Fahrradrahmens nach Anspruch 9, dadurch gekennzeichnet, daß zur Herstellung des Rohlings des Rahmens aus Verbundmaterial vor dem Einspritzen von Kunstharz in die Form Dome (23, 25, 34, 38, 39) vorgesehen werden, die derart ineinandergreifen, daß sie Vor dem Einsetzen in die Form ein Gerüst für die erste (A) und die zweite Untereinheit (B) bilden, und anschließend das Gerüst mit Verbundmaterial verkleidet wird, wonach die Einheit zum Einspritzen des Kunstharzes in der Form angeordnet wird.
